# EUROPÄISCHE PATENTSCHRIFT

(11) **EP 2 257 714 B1**
(45) Veröffentlichungstag und Bekanntmachung des Hinweises auf die Patenterteilung: **26.10.2011**
(21) Anmeldenummer: 09726885.8
(22) Anmeldetag: 09.02.2009
(51) Int. Cl.: F16B 25/10

(54) **GEWINDE FURCHENDE SCHRAUBE**
THREAD-FORMING SCREW
VIS TARAUDEUSE

(30) Priorität: 02.04.2008 DE 102008016866
(43) Veröffentlichungstag der Anmeldung: 08.12.2010
(73) Patentinhaber: Ludwig Hettich & Co., 78713 Schramberg-Sulgen (DE)
(72) Erfinder: HETTICH, Ulrich, 78713 Schramberg (DE)
(74) Vertreter: Liesegang, Eva
(86) Internationale Anmeldenummer: PCT/EP2009/000895
(87) Internationale Veröffentlichungsnummer: WO 2009/121448

(56) Entgegenhaltungen:
- WO-A-82/00505
- CH-A- 237 674
- US-A- 2 549 393

## Beschreibung

Die Erfindung betrifft eine Gewinde furchende Schraube, wie sie insbesondere zum direkten Einschrauben in Beton, Mauerwerk oder Gestein als Halterung für Anbauteile einsetzbar ist.

Eine solche, auch als Schraubanker bezeichnete Schraube ist in der Regel ein einstückiges Bauteil aus Vollmaterial, bei dem das Gewinde auf einen Schaftteil durch Kaltmassivumformen, wie Walzen oder Rollen, oder durch spanendes Bearbeiten, wie Drehen, Wirbeln oder Wälzfräsen, aufgebracht wird.

Die bekannten Herstellverfahren sind aufwendig und erfordern einen hohen Materialeinsatz insbesondere bei der spanenden Erzeugung des Gewindes. Aber auch bei einem Kaltmassivumformen wird stets Vollmaterial als Ausgangsmaterial eingesetzt.

Der Erfindung liegt die Aufgabe zugrunde, eine Gewinde furchende Schraube und Verfahren zu deren Herstellung zu schaffen, wobei eine kostengünstigere Fertigung bei geringerem Materialeinsatz erzielbar ist.

Zur Lösung dieser Aufgabe dienen eine Gewinde furchende Schraube gemäß Patentanspruch 1 und ein Verfahren gemäß Patentanspruch 9.

Die Schraube gemäß der Erfindung hat einen Schaftteil aus Vollmaterial und ein daran angefügtes Gewindeteil, das aus einem profilierten Metallband gewickelt und folglich hohl ist.

Eine solche Schraube lässt sich dadurch herstellen, dass ein profiliertes Band aus Metall zu einem Gewindeteil gewickelt und danach an den Schaftteil aus Vollmaterial angefügt wird.

Für das Gewindefurchen in hartem Material, wie Beton oder Stein, ist große Härte im Einschraubbereich des Gewindes gefordert. Andererseits wird von Schrauben beim Einsatz als Schraubanker in der Bautechnik insbesondere dann hohe Korrosionsbeständigkeit erwartet, wenn die Schraubanker im Außenbereich von Gebäuden eingesetzt werden.

Es ist daher eine Unteraufgabe der Erfindung, eine Schraube und Verfahren zu deren Herstellung zu schaffen, welche neben einer ausreichenden Belastbarkeit, insbesondere auf Biegung und Scherung, und einer ausreichenden Härte zum Gewindefurchen in Beton oder Gestein hohe Korrosionsbeständigkeit aufweist.

Diese Unteraufgabe wird durch Anspruch 4 gelöst. Der Gewindeteil ist hierbei aus zwei Gewindeabschnitten zusammengesetzt, die aus unterschiedlichen Metallen bestehen, insbesondere der Gewinde furchende Gewindeabschnitt aus einem härtbaren Stahl hohen Kohlenstoffgehalts und der die Hauptlast tragende Gewindeabschnitt aus einem in der Bautechnik zugelassenen hoch legierten und somit korrosionsbeständigen Edelstahl.

Eine Schraube nach Anspruch 4 lässt sich mit unterschiedlichen Herstellverfahren wirtschaftlich herstellen. So werden bei einem Verfahren nach Anspruch 11 zunächst die beiden profilierten Bandabschnitte aneinandergefügt und danach gemeinsam gewickelt, um den Gewindeteil zu erzeugen, worauf das gewickelte Gewindeteil im Bereich des zweiten Bandabschnittes gehärtet wird. Erst danach werden Schaftteil und Gewindeteil durch Fügen verbunden.

Bei einem alternativen Verfahren nach Anspruch 12 wird der erste Gewindeabschnitt aus einem profilierten Band aus einem korrosionsbeständigen Stahl gewickelt. Der zweite Gewindeabschnitt wird davon getrennt aus einem profilierten Band aus härtbarem Stahl gewickelt und anschließend gehärtet. Erst dann werden die beiden Gewindeabschnitte aneinander gefügt und wiederum durch Fügen mit dem Schaftteil verbunden.

Der zweite Gewindeabschnitt könnte stattdessen auch aus Vollmaterial bestehen und mit dem Gewinde in herkömmlicher Weise versehen werden, um anschließend separat vom ersten Gewindeabschnitt gehärtet zu werden.

Vorzugsweise werden die Gewindeabschnitte miteinander und mit dem Schaftteil durch Laserschweißen, Widerstandspressschweißen oder Reibschweißen aneinander gefügt.

Besonders aufwendig ist die herkömmliche Herstellung des Gewindeteils durch Kaltmassivumformen oder spanendes Erzeugen der Gewinde dann, wenn eine Schraube der beschriebenen Art mit zwei unterschiedlichen Gewinden auf unterschiedlichen Durchmessern zu versehen ist, nämlich mit einem metrischen Gewinde auf dem Schaftteil aus Vollmaterial und dem Betongewinde auf dem Gewindeteil. Das metrische Gewinde dient dabei zur besseren Halterung von Anbauteilen, z.B. Fassadenteilen an Beton-Außenwänden. Die Schrauben bzw. Schraubanker sind im montierten Zustand oft durch hohe Querkräfte belastet. Solche Querkräfte bilden im Beton im Abstand von der Mündung des Schraubenloches innerhalb des Betons so genannte Fließgelenke aus. Dieser Abstand ist von der Art der Werkstoffpaarung abhängig. Im Falle der Paarung StahlBeton wird das Fließgelenk in einem Abstand von der Lochmündung von mindestens dem 0,5-fachen des Kerndurchmessers des Gewindeteils im Bohrloch angenommen.

Gemäß einer vorteilhaften Weiterbildung der Erfindung weist daher ein in das Schraubenloch im Grundmaterial (Beton) eindringendes führendes Ende des Schaftteils einen reduzierten Durchmesser auf, der insbesondere etwa dem Kerndurchmesser des gewickelten Gewindeteils entspricht, sowie eine Länge hat, die etwa dem 0,5- bis 1,5-fachen des Kerndurchmessers des tragenden Gewindeteils im Bohrloch entspricht.

Bei dieser Ausgestaltung lässt sich die Quertragfähigkeit der Schraube optimal nutzen.

Andere Ausgestaltungen der Erfindung sind in den weiteren Unteransprüchen unter Schutz gestellt.

Die Erfindung ist im folgenden anhand schematischer Zeichnungen an Ausführungsbeispielen mit weiteren Einzelheiten näher erläutert. Es zeigen:
- Fig. 1: eine Seitenansicht einer ersten Ausführung einer Schraube gemäß der Erfindung;
- Fig. 2: einen Schnitt nach der Linie II-II in Fig. 1;
- Fig. 3: eine perspektivische Darstellung der Schraube nach den Fig. 1 und 2;
- Fig. 4: eine perspektivische Darstellung eines gewickelten Gewindeteils der Schraube nach den Fig. 1 bis 3;
- Fig. 5 und 6: eine Seitenansicht und eine Draufsicht auf den gewickelten Gewindeteil nach Fig. 4;
- Fig. 7: eine Seitenansicht einer zweiten Ausführung einer Schraube gemäß der Erfindung;
- Fig. 8: einen Schnitt nach der Linie VIII-VIII in Fig. 7;
- Fig. 9: eine Seitenansicht einer dritten Ausführung gemäß der Erfindung;
- Fig. 10: eine Seitenansicht einer Variante der dritten Ausführung einer Schraube gemäß Fig. 9 ähnlich Fig. 7;

- Fig. 11: eine Schraube nach Fig. 10 in montiertem Zustand mit Halterung eines Anbauteiles an einer Wand; und
- Fig. 12: eine Schraube nach Fig. 1 in montiertem Zustand mit Halterung eines Anbauteils an einer Wand.

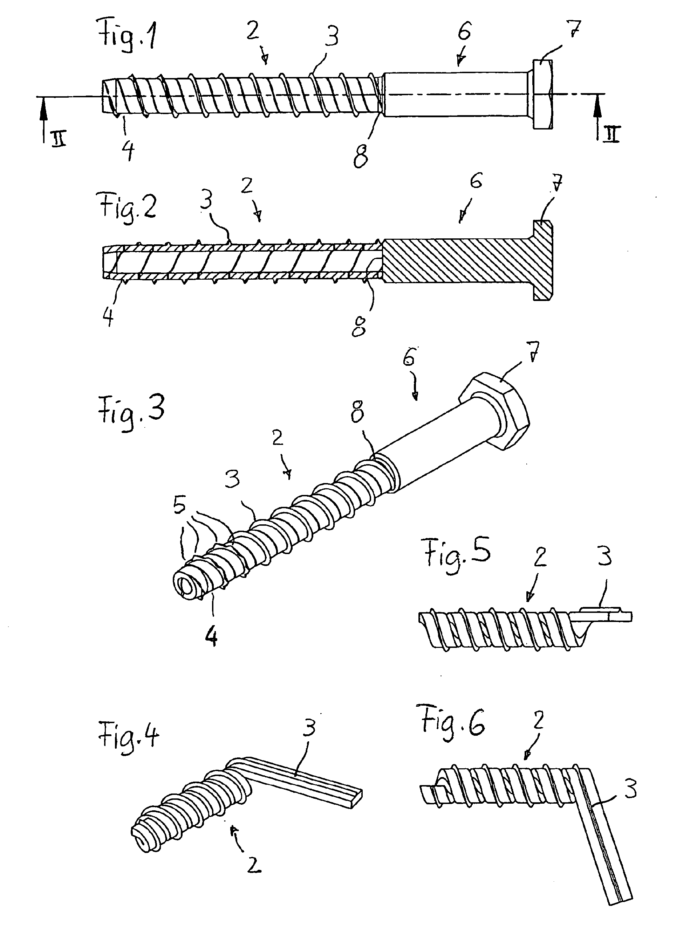

Die in den Figuren 1 bis 3 gezeigte Schraube ist ein so genannter Schraubanker zum direkten, Gewinde furchenden Einschrauben in Beton, Gestein oder Mauerwerk mit dem Zweck, Anbauteile an der Außenseite einer Betonwand oder dgl. sicher zu befestigen. Der Schraubanker hat einen Gewindeteil 2, der aus einem profilierten Metallband gewickelt ist. Die Profilierung besteht aus einer in das Metallband eingeprägten Längsrippe, die in gleicher Richtung wie die Seitenkanten des Metallbandes verläuft und durch das Wickeln des Bandes ein Gewinde 3 bildet, das zum Furchen eines Gewindes in einem vorgebohrten Loch in Beton geeignet ist. Am Einschraubende 4 ist der Gewindeteil 2 konisch verjüngt gewickelt, um das Einführen der Schraube in ein vorgebohrtes Bohrloch zu erleichtern. Aus den Figuren 1 und 3 ist ersichtlich, dass das Gewinde 3 im Bereich des Einschraubendes 4 über einen Länge bis zu drei Windungen mit Zähnen oder Zacken 5 versehen ist, die das Furchen unterstützen, wie an sich bekannt.

An das Gewindeteil 2 schließt ein Schaftteil 6 aus Vollmaterial an, das montageseitig einen Antrieb trägt, hier in Form eines Sechskantkopfes 7. Der Schaftteil 6 hat eine Länge, die in etwa der Breite eines zu befestigenden Anbauteiles entspricht. Der gewickelte Gewindeteil 2 und der Schaftteil 6 sind beispielsweise durch Schweißen, wie Laserschweißen, Widerstandspressschweißen oder Reibschweißen, an einer Trennfuge 8 miteinander verbunden. Voraussetzung hierzu ist, dass der Schaftteil 6 aus einem mit dem Metall des Gewindeteils 2 verschweißbaren Metall, wie einem Baustahl, besteht. Denkbar ist jedoch auch, dass der Schaftteil 6 aus einem harten Kunststoff besteht. In diesem Fall sind die Teile 2, 6 durch Kleben oder mittels einer anderen bekannten Fügetechnik miteinander verbunden.

Der Gewindeteil 2 kann zur Aufrechterhaltung der Elastizität im Bereich seines verjüngten Einschraubendes 4 gehärtet sein, um das Gewindefurchen zu ermöglichen. Im lastaufnehmenden Hauptbereich bleibt der Gewindeteil 2 jedoch ungehärtet.

In den Fig. 4 bis 6 ist der Gewindeteil 2 noch einmal im Stadium des Wickelns aus einem profilierten Metallband dargestellt. Es ist ersichtlich, dass das Gewinde 3 durch eine mittige Profilierung in Längsrichtung des Metallbandes gebildet ist, die parallel zur Wickelrichtung verläuft. Dies ist nicht notwendig so: denkbar sind auch eine von der Längsrichtung abweichende Profilierung wie auch eine mehrgängige Ausbildung des Gewindes 3.

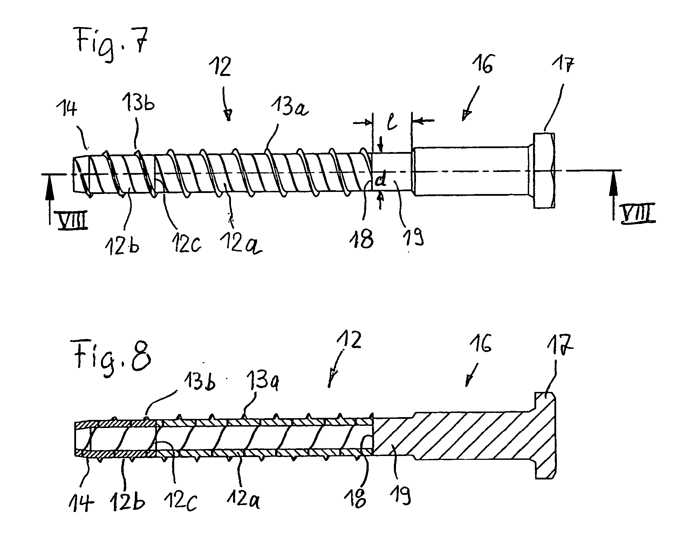

Die Figuren 7 und 8 zeigen eine zweite Ausführung der Erfindung, bei der gleiche oder gleich wirkende Teile mit um die Zahl 10 erhöhten Bezugszahlen versehen sind.

Bei dieser Ausführung ist der Gewindeteil 12 in zwei gewickelte Gewindeabschnitte 12a und 12b unterteilt, die an einer Trennfuge 12c aneinander gefügt sind und ein aus zwei Teilgewinden 13 , 13b zusammengesetztes Gewinde 13 mit nahtlosem Übergang bilden, das durch entsprechende Profilierung zweier Metallbänder beim Wickeln entstanden ist.

Der zum Gewindefurchen dienende Gewindeabschnitt 12b trägt dabei auch hier ein konisch verjüngt gewickeltes Einschraubende 14. Er besteht aus einem härtbaren Baustahl hohen Kohlenstoffgehaltes und hat nach dem Härten eine zum Gewindefurchen geeignete Härte. Dagegen ist der Gewindeabschnitt 12b, welcher zur Vermeidung von Korrosion aus einem hoch legierten Edelstahl bestehen kann, relativ weich und elastisch zur Aufnahme der auf die Schraube wirkenden Hauptbelastung durch Biegung und Scherung aufgrund der von Anbauteilen aufgebrachten Querkräfte auf den Schaftteil 16 der Schraube.

Der Schaftteil 16 hat einen Absatz 19 reduzierten Durchmessers, welcher über die Trennfuge 18 an den Gewindeteil 12 angefügt ist und eine Länge 1 hat, die dem 0,5-fachen bis 1,5-fachen des Kerndurchmessers d des Gewindes 13 entspricht. Der reduzierte Durchmesser des Absatzes 19 ist hier gleich dem Kerndurchmesser d des Gewindes 13.

Der übrige Teil des Schaftteiles 16 hat abgesehen vom Kopf 17 gleichen Durchmesser wie der Außendurchmesser des Gewindes 13.

Die beiden Gewindeabschnitte 12a, 12b können vor dem Härten des Gewindeabschnittes 12b in einem ersten Herstellverfahren getrennt von dem Schaftteil 16 gemeinsam gewickelt werden, bevor der Gewindeabschnitt 12b gehärtet wird und der Gewindeteil 12 mit dem ersten Gewindeabschnitt 12a an den Schaftteil 16 angefügt wird.

In einem alternativen Herstellverfahren können die Gewindeabschnitte 12a, 12b getrennt voneinander gewickelt werden, so dass der zum Furchen bestimmte Gewindeabschnitt 12b unabhängig von dem Gewindeabschnitt 12a gehärtet werden kann. Erst dann werden die Gewindeabschnitte 12a und 12b miteinander verschweißt, und zwar vor oder nach dem Fügen des ersten Gewindeabschnitts 12a an den Absatz 19 des Schaftteils 16.

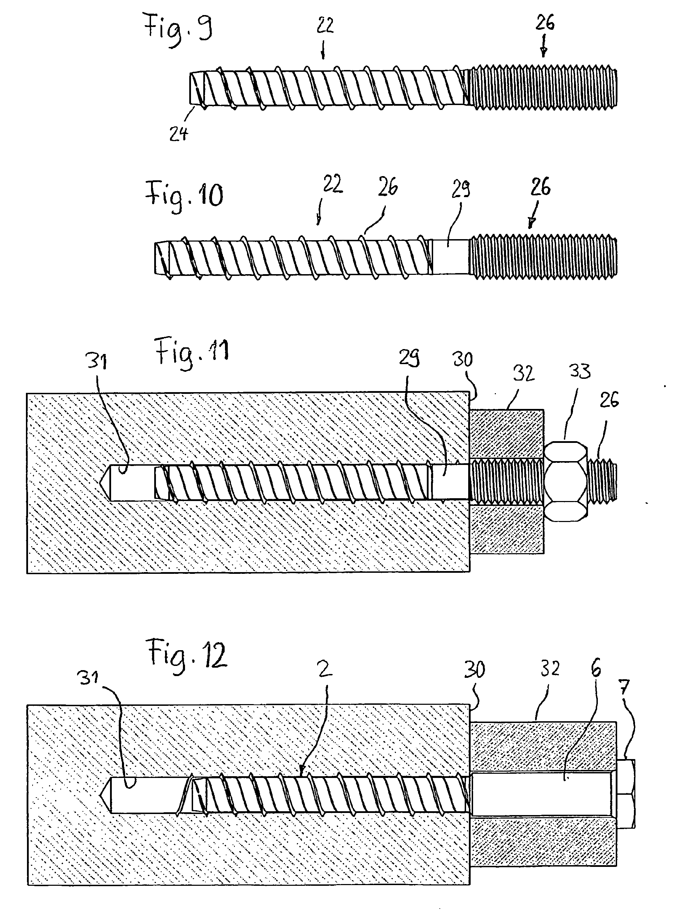

Die Figuren 9 und 10 zeigen in Gestalt einer so genannten Stockschraube eine dritte Ausführung einer Schraube nach der Erfindung in zwei Varianten. Hierbei sind für gleiche oder gleich wirkende Teile gleiche, um die Zahl 10 gegenüber den Bezugszahlen in den Figuren 7 und 8 erhöhte Bezugszahlen verwendet.

In den Figuren 9 und 10 ist wie in der ersten Ausführung nach den Figuren 1 bis 3 ein einheitliches Gewindeteil 22 vorgesehen. Stattdessen könnte im Falle einer korrosionsbeständigen Schraube das Gewindeteil auch in zwei gesonderte Gewindeabschnitte unterteilt sein, wie dies für die zweite Ausfürhung anhand der Figuren 7 und 8 erläutert ist.

Das einheitliche Gewindeteil 22 ist in gleicher Weise ausgebildet wie bei der ersten Ausführung nach den Figuren 1 bis 3, so dass sich eine nochmalige Beschreibung erübrigt. Anstatt eines glattwandigen Schaftteiles 6 ist hier jedoch ein weiterer Gewindeabschnitt 26 mit einem metrischen Gewinde mit etwa gleichem Außendurchmesser wie der Außendurchmesser des Gewindeteils 22 versehen. Der Gewindeteil 22 und der Gewindeabschnitt 26 sind über die Trennfuge 29 miteinander verschweißt.

Die in Fig. 10 gezeigt Stockschraube unterscheidet sich von derjenigen nach Fig. 9 dadurch, dass zwischen dem Gewindeteil 22 und dem Gewindeabschnitt 26 mit metrischem Gewinde ein Absatz 29 ähnlich wie bei der zweiten Ausführung nach den Figuren 7 und 8 aus den gleichen Gründen vorgesehen ist, um nämlich unter Berücksichtigung eines Fließgelenkes im Abstand 1 von der Bohrlochmündung innerhalb des Bohrloches die Querbelastbarkeit der Schraube optimal auszunutzen, wobei der Abstand 1 bei gleicher Werkstoffpaarung Stahl/Beton erfindungsgemäß ebenfalls zwischen dem 0,5- und dem 1,5-fachen des Kerndurchmessers des Gewindeteiles 22 liegt.

Die Fig. 11 zeigt eine Schraube gemäß Fig. 10 in montiertem Zustand an einer Betonwand 30, wobei ein Anbauteil 32 mittels einer auf den Gewindeabschnitt 26 aufgeschraubten Mutter 33 an eine Betonwand 30 angepresst ist.

Fig. 12 zeigt eine Schraube gemäß den Figuren 1 bis 3 mit Gewindeteil 2 und glattwandigem Schaftteil 6 aus Vollmaterial in montiertem Zustand. In diesem Zustand wird ein Anbauteil 42 zwischen dem Sechskantkopf 7 der Schraube und einer Betonwand 30 eingespannt gehalten.

Die Figuren 11 und 12 machen auch folgendes deutlich: Ein Korrosionsangriff aufgrund von Witterungseinflüssen oder dgl. ist nur über die Bohrlochmündung an der Betonwand 30 möglich und verliert seinen Einfluss mit zunehmender Tiefe des Bohrloches. Wenn bei einer zweiteiligen Ausführung des Gewindeteils 12 gemäß den Figuren 7 und 8 der lastaufnehmende Gewindeabschnitt 12a des Gewindeteiles 12 aus hoch legiertem, korrosionsbeständigen Edelstahl bestünde, wäre ein Korrodieren des furchenden Gewindeabschnittes 12b in der Tiefe des Bohrloches 31 praktisch ausgeschlossen.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Gewinde furchende Schraube, umfassend
- einen Schaftteil (6; 16; 26) aus Vollmaterial
- einen an den Schaftteil angefügten, aus einem profilierten Metallband gewickelten Gewindeteil (2; 12; 22).

2. Schraube nach Anspruch 1, **dadurch gekennzeichnet, dass** ein Einschraubende (4; 14; 24) des Gewindeteils (2; 12; 22) konisch verjüngt ist.

3. Schraube nach Anspruch 1 oder 2, **dadurch gekennzeichnet, dass** der Gewindeteil (12) aus zwei aneinander gefügten ersten und zweiten Gewindeabschnitten (12a, 12b) besteht.

4. Schraube nach Anspruch 3, **dadurch gekennzeichnet, dass** der erste Gewindeabschnitt (12b) mit dem Einschraubende (14) aus einem härtbaren Metall, wie einem Stahl mit hohem Kohlenstoffgehalt, und der zweite, an den Schaftteil (16) angefügte Gewindeabschnitt (12a) aus einem korrosionsbeständigen Metall, wie einem hoch legierten Stahl, besteht.

5. Schraube nach einem der Ansprüche 1 bis 4, **dadurch gekennzeichnet, dass** der Schaftteil (6; 16; 26) einen Durchmesser hat, der im wesentlichen dem Außendurchmesser des gewickelten Gewindeteils (2; 12; 22) entspricht.

6. Schraube nach einem der Ansprüche 1 bis 5, **dadurch gekennzeichnet, dass** ein führendes Ende (19) des Schaftteils (16) einen reduzierten Durchmesser aufweist, der insbesondere etwa dem Kerndurchmesser (d) des gewickelten Gewindeteils (12) entspricht.

7. Schraube nach Anspruch 6, **dadurch gekennzeichnet, dass** die Länge (1) des führenden Endes (19) mit reduziertem Durchmesser das 0,5 bis 1,5-flache des Kerndurchmessers des Gewindeteils (12) beträgt.

8. Schraube nach einem der Ansprüche 1 bis 7, **dadurch gekennzeichnet, dass** der Schaftteil (26) ein metrisches Gewinde aufweist.

9. Verfahren zum Herstellen einer Gewinde furchenden Schraube mit einem Schaftteil aus Vollmaterial, **dadurch gekennzeichnet, dass** ein profiliertes Band aus Metall zu einem Gewindeteil gewickelt und danach an den Schaftteil angefügt wird.

10. Verfahren nach Anspruch 9, **dadurch gekennzeichnet, dass** der gewickelte Gewindeteil durch Schweißen an den Schaftteil angefügt wird.

11. Verfahren zum Herstellen einer korrosionsbeständigen, Gewinde furchenden Schraube mit einem Schaftteil aus Vollmaterial, bei dem
- ein erster Bandabschnitt aus einem profilierten Band aus korrosionsbeständigem Stahl bereitgestellt wird,
- ein zweiter Bandabschnitt aus einem profilierten Band aus härtbarem Stahl bereitgestellt wird,
- der erste Bandabschnitt mit dem zweiten Bandabschnitt durch Fügen verbunden wird,
- die beiden gefügten Bandabschnitte gemeinsam zu einem Gewindeteil gewickelt werden,
- der gewickelte Gewindeteil im Bereich eines Einschraubendes gehärtet wird,
- der gewickelte Gewindeteil an den Schaftteil angefügt wird.

12. Verfahren zum Herstellen einer korrosionsbeständigen, Gewinde furchenden Schraube mit einem Schaftteil aus Vollmaterial, bei dem
- ein profiliertes Band aus einem korrosionsbeständigen Stahl zu einem ersten Gewindeabschnitt gewickelt wird,
- ein profiliertes Band aus einem härtbaren Stahl zu einem zweiten Gewindeabschnitt gewickelt und anschließend gehärtet wird,
- der erste Gewindeabschnitt mit dem zweiten gehärteten Gewindeabschnitt durch Fügen zu einem einheitlichen Gewindeteil verbunden wird,
- der erste Gewindeabschnitt an den Schaftteil angefügt wird.

13. Verfahren nach Anspruch 11 oder 12, **dadurch gekennzeichnet, dass** der korrosionsbeständige Stahl ein hoch legierter Stahl ist und dass der härtbare Stahl ein Baustahl mit hohem Kohlenstoffgehalt ist.

14. Verfahren nach einem der Ansprüche 11 bis 13, **dadurch gekennzeichnet, dass** die Gewindeabschnitte miteinander und mit dem Schaftteil durch Schweißen gefügt werden.

## Claims

1. A thread-furrowing screw comprising
- a shaft portion (6; 16; 26) made of solid material
- a thread portion (2; 12; 22) attached to the shaft portion, which thread portion (2; 12; 22) is wound from a profiled metal strip.

2. Screw according to claim 1, **characterised in that** a screw-in end (4; 14; 24) of the thread portion (2; 12; 22) is conically tapered.

3. Screw according to claim 1 or 2, **characterised in that** the thread portion (12) comprises two first and second thread sections (12a, 12b) attached to each other.

4. Screw according to claim 3, **characterised in that** the first thread section (12b) with the screw-in end (14) comprises a hardenable metal, such as steel with a high carbon content, and the second thread section (12a), which is attached to the shaft portion (16), comprises a corrosion-resistant metal, such as a high-alloy steel.

5. Screw according to any one of claims 1 to 4, **characterised in that** the shaft portion (6; 16; 26) has a diameter that substantially corresponds to the external diameter of the wound thread portion (2; 12; 22).

6. Screw according to any one of claims 1 to 5, **characterised in that** a leading end (19) of the shaft portion (16) has a reduced diameter which, in particular, approximately corresponds to the core diameter (d) of the wound thread portion (12).

7. Screw according to claim 6, **characterised in that** the length (1) of the leading end (19) with the reduced diameter corresponds to 0.5 times to 1.5 times the core diameter of the wound thread portion (12).

8. Screw according to any one of claims 1 to 7, **characterised in that** the shaft portion (26) comprises a metric thread.

9. A method for manufacturing a thread-furrowing screw with a shaft portion made from solid material, **characterised in that** a profiled strip of metal is wound to form a thread portion and is then attached to the shaft portion.

10. The method according to claim 9, **characterised in that** the wound thread portion is attached to the shaft portion by welding.

11. A method for manufacturing a corrosion-resistant thread-furrowing screw with a shaft portion made from solid material, wherein
- a first strip section consisting of a profiled strip made from corrosion-resistant steel is provided,
- a second strip section consisting of a profiled strip made from hardenable steel is provided,
- the first strip section is connected to the second strip section by attaching,
- the two attached strip sections are jointly wound to form a thread portion,
- the wound thread portion is hardened in the region of the screw-in end,
- the wound thread portion is attached to the shaft portion.

12. A method for manufacturing a corrosion-resistant thread-furrowing screw with a shaft portion made from solid material, in which
- a profiled strip made from a corrosion-resistant steel is wound to form a first thread section,
- a profiled strip consisting of a hardenable steel is wound to form a second thread section and is subsequently hardened,
- the first thread section is connected to the second thread section which is hardened by joining so as to form a uniform thread portion,
- the first thread section is attached to the shaft portion.

13. Method according to claim 11 or 12, **characterised in that** the corrosion-resistant steel is a high-alloy steel, and the hardenable steel is an engineering steel with a high carbon content.

14. Method according to any one of claims 11 to 13, **characterised in that** the thread sections are attached to each other and to the shaft portion by welding.

## Revendications

1. Vis taraudeuse, comprenant
- une partie de tige (6 ; 16 ; 26) en matériau plein,
- une partie filetée (2 ; 12 ; 22) spiralée, assemblée à la partie de tige et formée par une bande métallique profilée.

2. Vis selon la revendication 1, **caractérisée en ce qu'**une extrémité de vissage (4 ; 14 ; 24) de la partie filetée (2 ; 12 ; 22) se rétrécit en forme de cône.

3. Vis selon la revendication 1 ou 2, **caractérisée en ce que** la partie filetée (12) est formée par deux tronçons filetés (12a, 12b), à savoir un premier et un deuxième, assemblés l'un à l'autre.

4. Vis selon la revendication 3, **caractérisée en ce que** le premier tronçon fileté (12b) muni de l'extrémité de vissage (14) est réalisé dans un métal durcissable, tel qu'un acier à teneur élevée en carbone, et le deuxième tronçon fileté (12a), assemblé à la partie de tige (16), est réalisé dans un métal résistant à la corrosion, tel qu'un acier hautement allié.

5. Vis selon l'une quelconque des revendications 1 à 4, **caractérisée en ce que** la partie de tige (6 ; 16 ; 26) a un diamètre qui correspond sensiblement au diamètre extérieur de la partie filetée (2 ; 12 ; 22) spiralée.

6. Vis selon l'une quelconque des revendications 1 à 5, **caractérisée en ce qu'**une extrémité antérieure (19) de la partie de tige (16) possède un diamètre réduit, qui correspond en particulier à peu près au diamètre (d) du noyau de la partie filetée (12) spiralée.

7. Vis selon la revendication 6, **caractérisée en ce que** la longueur (1) de l'extrémité antérieure (19) à diamètre réduit mesure de 0,5 à 1,5 fois le diamètre du noyau de la partie filetée (12).

8. Vis selon l'une quelconque des revendications 1 à 7, **caractérisée en ce que** la partie de tige (26) comporte un filet métrique.

9. Procédé destiné à la réalisation d'une vis taraudeuse comportant une partie de tige en matériau plein, **caractérisé en ce qu**'une bande de métal profilée est enroulée en spirale pour obtenir une partie filetée spiralée et est assemblée ensuite à la partie de tige.

10. Procédé selon la revendication 9, **caractérisé en ce que** la partie filetée spiralée est assemblée par soudage à la partie de tige.

11. Procédé destiné à la réalisation d'une vis taraudeuse résistante à la corrosion, comportant une partie de tige en matériau plein, selon lequel :
- un premier tronçon de bande, réalisé dans une bande profilée en acier résistant à la corrosion, est mis à disposition,
- un deuxième tronçon de bande, réalisé dans une bande profilée en acier durcissable, est mis à disposition,
- le premier tronçon de bande est assemblé bout à bout au deuxième tronçon de bande,
- les deux tronçons de bandes assemblés bout à bout sont enroulés conjointement en spirale pour obtenir une partie filetée,
- la partie filetée spiralée est durcie dans la zone d'une extrémité de vissage,
- la partie filetée spiralée est assemblée à la partie de tige.

12. Procédé destiné à la réalisation d'une vis taraudeuse résistante à la corrosion, comportant une partie de tige en matériau plein, selon lequel :
- une bande profilée en acier résistant à la corrosion est enroulée en spirale pour obtenir un premier tronçon fileté,
- une bande profilée en acier durcissable est enroulée en spirale pour obtenir un deuxième tronçon fileté et est durcie ensuite,
- le premier tronçon fileté est assemblé bout à bout au deuxième tronçon fileté durci pour obtenir une partie filetée uniforme,
- le premier tronçon fileté est assemblé à la partie de tige.

13. Procédé selon la revendication 11 ou 12, **caractérisé en ce que** l'acier résistant à la corrosion est un acier hautement allié et **en ce que** l'acier durcissable est un acier de construction à teneur élevée en carbone.

14. Procédé selon l'une quelconque des revendications 11 à 13, **caractérisé en ce que** les tronçons filetés sont assemblés par soudage l'un à l'autre et à la partie de tige.
